# EUROPÄISCHE PATENTSCHRIFT

(11) **EP 1 624 278 B1**
(45) Veröffentlichungstag und Bekanntmachung des Hinweises auf die Patenterteilung: **23.12.2015**
(21) Anmeldenummer: 05008948.1
(22) Anmeldetag: 23.04.2005
(51) Int. Cl.: G01B 9/02, G01B 11/14, G01S 17/36, F16F 9/04

(54) **Luftfeder mit einer Messeinrichtung zur Abstands-Bestimmung von Kraftfahrzeugteilen**
Air spring with a measurement device for determining the distance of motor vehicle parts
Ressort pneumatique comprenant un dispositif de mesure pour déterminer la distance de pièces d'un véhicule automobile

(30) Priorität: 05.08.2004 DE 102004038239
(43) Veröffentlichungstag der Anmeldung: 08.02.2006
(73) Patentinhaber: TrelleborgVibracoustic GmbH, 64293 Darmstadt (DE)
(72) Erfinder: Klatt, Christopher, 69118 Heidelberg (DE); Pelz, Peter, 22769 Hamburg (DE)
(74) Vertreter: Flügel Preissner Kastel Schober

(56) Entgegenhaltungen:
- EP-A- 0 313 501
- EP-A- 0 551 986
- DE-A1- 3 916 176
- US-A- 4 180 794
- US-A1- 2003 011 780
- US-B1- 6 646 723
- PATENT ABSTRACTS OF JAPAN Bd. 013, Nr. 073 (P-830), 20. Februar 1989 (1989-02-20) & JP 63 259403 A (NANKAI RIKAGAKU KIKI SEISAKUSHO:KK; others: 01), 26. Oktober 1988 (1988-10-26)

## Beschreibung

### Technisches Gebiet

Die Erfindung betrifft eine Luftfeder mit einer Messeinrichtung zur Abstands-Bestimmung von Kraftfahrzeugteilen.

### Stand der Technik

Messeinrichtungen zur Abstandsbestimmung von Kraftfahrzeugteilen sind allgemein bekannt. Aus der DE 101 30 507 A1 ist eine Messeinrichtung zur Abstandsbestimmung von Kraftfahrzeugteilen bekannt, wobei die vorbekannte Messeinrichtung der Niveau-Bestimmung in einer Luftfeder dient. Die Messeinrichtung umfasst druckempfindliche Sensoren, die an dem Abrollkolben der Luftfeder angeordnet sind. Die Sensoren geben ein Signal, wenn der Abrollkolben in die Luftfeder eintaucht und dabei der Rollbalg über dem Abrollkolben mit den druckempfindlichen Sensoren abrollt.
Bei einer derartigen Messeinrichtung jeweils ist eine Kalibrierung für jeden Luftfedertyp bzw. jedes zu vermessende Kraftfahrzeugteil notwendig. Es erfolgt keine absolute, sondern eine indirekte Messung des Abstandes.

Aus EP 0 551 986 A1 und EP 0 313 501 A2 sind Luftfedern bekannt, in denen eine Messeinrichtung mit optischem Messprinzip angeordnet ist. Es ist jedoch nicht offenbart, als Lichtquelle Laserlicht einzusetzen.

### Darstellung der Erfindung

Der Erfindung liegt die Aufgabe zugrunde, eine Luftfeder mit einer Messeinrichtung zur Abstands-Bestimmung von Kraftfahrzeugteilen bereitzustellen, die einfach justierbar ist, unempfindlich gegenüber Störeinflüssen aus der Umgebung und Beschädigungen ist sowie hochgenau ist.

Die Erfindung wird mit den Merkmalen der unabhängigen Ansprüche 1 und 4 gelöst. Auf vorteilhafte Ausgestaltungen nehmen die abhängigen Anspruche 2 und 3 sowie 5 - 7 Bezug.

Zur Lösung der Aufgabe wird gemäß Anspruch 1 eine Luftfeder mit einer Messeinrichtung mit einem optischen Messprinzip, vorgeschlagen. Die Messeinrichtung umfasst zumindest einen Sender, einen Reflektor und einen Empfänger sowie eine Auswerteeinheit. Die Luftfeder umfasst einen Rollbalg, an dem an einer Stirnseite eine Abdeckung und an der anderen Stirnseite ein Abrollkolben angeordnet ist. An der Abdeckung sind der zumindest eine Sender und der zumindest eine Empfänger angeordnet und an dem Abrollkolben ist der zumindest eine Reflektor angeordnet Dabei ist die Answerteeinheit zur Bestimmung des Abstands von Abdeckung und Abrollholben eingerichtet. Der Sender ist als Laserstrahlquelle gleich bleibt, können verschiedene wellenanalytische Messmethoden eingesetzt zum Aussenden eines kontinuierlichen modulierten Lichtsignals ausgebildet, wobei in der Auswerteeinheit die Phasendifferenz zwischen empfangenem und gesendetem Lichtsignal bestimmt wird, oder zum Aussenden eines kurzen Lichtimpulses ausgebildet, wobei die Laufzeit des Lichtimpulses bis zum Auftreffen auf dem Empfänger bestimmt wird.

Eine Messeinrichtung mit einem optischen Messprinzip ermöglicht eine absolute Wegmessung. Dabei wird die Entfernung zwischen Sender, Reflektor und Empfänger bestimmt, wobei diese Entfernung gleichzeitig ein Maß für den Abstand der Kraftfahrzeugteile bildet. Eine Kalibrierung kann entfallen. Die optische Messeinrichtung ist unempfindlich gegenüber elektromagnetischer Störstrahlung. Durch das Fehlen beweglicher mechanischer Teile ist die Messeinrichtung robust. Des weiteren weist die Messeinrichtung eine geringe Teileanzahl auf und kann einfach in Kraftfahrzeugteile montiert werden.

Der Sender ist als Laserstrahlquelle ausgebildet. Eine Laserstrahlquelle erzeugt ein paralleles, monochromatisches und kohärentes Lichtbündel. Die Intensität der Strahlung ist höher als bei einer anderen technischen Lichtquelle und wird mit einer Modulationsfrequenz in der Intensität variiert. Da die Frequenz eines Laserstrahls werden. Für bestimmte Messverfahren sind Laserstrahlquellen verfügbar, die sehr kurze Lichtimpulse aussenden.

Der Reflektor kann als Retroreflektor ausgebildet sein. Retroreflektoren, auch Tripelspiegel oder Katzenauge genannt, reflektieren Licht in dieselbe Richtung zurück aus der sie gekommen sind. Das ist vorteilhaft, wenn sich das zu vermessende Kraftfahrzeugteil neben einer Bewegung in einer Richtung zusätzlich verdrehen oder kippen kann.

Der Empfänger kann als positionsempfindlicher Sensor ausgebildet sein. Ein positionsempfindlichen Sensor ermöglicht neben der Detektierung des empfangenen Lichtsignals zusätzlich die Erkennung der Position des Lichtsignals auf dem Sensor.

Mehrere Empfänger können, im Längsschnitt betrachtet, nebeneinander mit Abstand zueinander angeordnet sein. Dann können neben der Messung des Abstandes von Kraftfahrzeugteilen zusätzlich noch deren Kipp- und Drehbewegungen relativ zueinander gemessen werden.

Die Abstandsbestimmung für das erfindungsgemäße Verfahren geht grundsätzlich von folgenden Schritten aus :
- Aussenden eines Lichtsignals durch zumindest einen Sender;
- Reflektieren des Lichtsignals durch zumindest einen Reflektor;
- Empfangen des Lichtsignals in zumindest einem Empfänger;
- Auswerten des empfangenen Lichtsignals in einer Auswerteeinheit zur Ermittlung des Abstands.

Für das Verfahren sind nur wenige Bauteile notwendig, die einfach an den zu vermessenden Kraftfahrzeugteilen angebracht werden können. Die Entfernung vom Sender zum Reflektor stellt die zu vermessende Entfernung dar, weshalb eine Kalibrierung der Messeinrichtung entfallen kann. Zur Auswertung des Lichtsignals steht eine Vielzahl von Methoden zur Verfügung.

Die Bestimmung des Abstands kann durch eine Messung der Laufzeit des Lichtsignals vom Sender über den Reflektor zum Empfänger erfolgen. Dabei wird ein kurzer Lichtimpuls, meist durch eine Impulslaserdiode, ausgesendet und die Laufzeit des Lichtimpulses bis zum Auftreffen auf dem Empfänger gemessen. Mit Einbeziehung des Brechungsindex des Ausbreitungsmediums kann die Entfernung mit einfachen physikalischen Zusammenhängen berechnet werden.

Das Lichtsignal kann als Lichtimpuls mit einer Dauer von weniger als 10⁻¹² s gesendet werden. Da die Laufzeit des Lichtstrahls bei Entfernungen in der Größenordnung von 100 mm etwa 3 x 10⁻¹⁰ s beträgt, ist es erforderlich, dass ein Lichtimpuls mit einer kleineren Zeitdauer gesendet wird. Diese sehr kurzen Lichtimpulse können mittels einer Impulslaserdiode gesendet werden.

Ein erfindungsgemäßes Verfahren zur Bestimmung des Abstands von Abdeckung und Abrollholben einer Luftfeder nach einem der Ansprüche 1 bis 3 weist gemäß Anspruch 4 folgende Schritte auf:
- Aussenden zumindest eines kontinuierlichen modulierten Lichtsignals durch zumindest einen Sender, der in einer Abdeckung einer Luftfeder angeordnet ist;
- Reflektieren des kontinuierlichen Lichtsignals durch einen Reflektor, der in einem Abrollkolben der Luftfeder angeordnet ist;
- Empfangen des kontinuierlichen Lichtsignals durch zumindest einem Empfänger, der in der Abdeckung angeordnet ist und Umsetzung zu einem elektrischen Signal;
- Auswerten des empfangenen Lichtsignals in einer Auswerteeinheit durch Bestimmung der Phasendifferenz zwischen elektrischem Signal stammend aus dem empfangenem Lichtsignal und elektrischem Signal zugrundeliegend dem gesendetem Lichtsignal;
- Bestimmung des Abstands (H) aus der Phasendifferenz der beiden elektrischen Signale.

Nach dieser Methode wird die Phasenverschiebung des gesendeten und des empfangenen Lichtsignals ermittelt, die proportional zum Lichtlaufweg und damit zur der zu bestimmenden Entfernung ist. Einer elektromagnetische Welle mit einer Modulationsfrequenz von 1,875 GHz entspricht beispielsweise einer Modulationswellenlänge von 160 mm. Zur Abstandsbestimmung wird die Phasenverschiebung in Grad bestimmt, wobei eine Phasenverschiebung von 360° in diesem Fall eine Verschiebung von 160 mm bedeutet. Eine Phasenverschiebung von 1° bedeutet eine Verschiebung von 0,44 mm, bzw. einer Verschiebung von 0,22 mm zwischen Sender und Reflektor. Für dieses Messverfahren sind keine sehr kurzen Lichtimpulse erforderlich, sondern ein kontinuierliches aber moduliertes Signal. Hierdurch entsteht eine Abhängigkeit von der Trägerfrequenz unabhängig. Die dafür notwendigen Bauelemente sind kostengünstig.

Die Frequenz des Lichtsignals kann zwischen 0,5 bis 5 GHz, vorzugsweise 1 bis 2 GHz betragen. Für dieses Frequenzspektrum sind kostengünstige Bauelemente verfügbar.

In der Auswerteeinheit können die Lichtsignale in ein Antivalenz-Gatter (Exklusiv-Oder) eingeleitet werden und das aus der entsprechenden logischen Operation resultierende Signal kann über eine bestimmte Anzahl von Zyklen summiert werden und der aus der Summation resultierende Wert kann in eine elektrische Spannung umgesetzt werden, die ein Maß für den zu messenden Abstand repräsentiert. In dem Antivalenzgatter wird das empfangene und das gesendete Lichtsignal überlagert und der Bereich herausgefiltert, an dem sich die Phasenlagen der beiden Wellen unterscheiden. Als Ergebnis ergibt sich ein Signal mit einer charakteristischen Wellenlänge, die ein Maß für die Phasenverschiebung und damit für die Entfernung ist. Durch die Summation über eine bestimmte Zyklenanzahl kann das resultierende Signal in eine leicht zu messende Spannung umgesetzt werden, die wiederum ein Maß für die Entfernung ist.

In einer weiteren Ausgestaltung kann ein Verfahren folgende Schritte aufweisen:
- Bilden zweier kontinuierlicher elektrischer Modulationssignale durch zwei Frequenzgeneratoren, wobei sich die Modulationsfrequenzen der beiden Signale um zumindest 1 MHz unterscheiden;
- Modulation der Abstrahlungsleistung einer Laserlichtquelle mit einer der beiden Frequenzen.
- Aussenden des resultierenden Lichtsignals;
- Reflektieren des resultierenden Lichtsignals durch einen Reflektor;
- Empfangen des resultierenden Lichtsignals durch zumindest einen Empfänger, z.B. einer Photodiode, die das optische Signal wieder in ein elektrisches umsetzt.
- Aufbereitung des empfangenen und gesendeten Signals durch Filter.
- Mischen des Ausgangssignals und des empfangenen Signals mit der zweiten Modulationsfrequenz, wodurch Misch- bzw. Schwebungssignale entsehen, auch mit der Differenzfrequenz .
- Beseitigen der höherfrequenten Signale durch einen Tiefpassfilter, so dass nur die Differenzfrequenzen bestand haben.
- Bestimmung der Phasendifferenz aus der Schwebungsfrequenz des empfangenen Lichtsignals und der Schwebungsfrequenz des gesendeten Lichtsignals in der Auswerteeinheit;
- Bestimmung des Abstands aus der Phasendifferenz.

Durch die Überlagerung zweier Signale, deren Frequenz sich nur gering voneinander unterscheiden ergibt sich ein resultierendes Signal mit einer Schwebung. Die Schwebung weist eine Frequenz auf, die wesentlich niedriger liegt, als die Frequenz der ursprünglichen Signale. Die Schwebung wird nach dem gleichen Verfahren ausgewertet wie zuvor beschrieben.

Die Bestimmung des Abstands könnte auch durch Bestimmung der Lage des empfangenen Lichtsignals auf dem Empfänger erfolgen, wobei der Empfänger positionsempfindlich ausgebildet ist (dies ist jedoch nicht durch die Ansprüche abgedecht). Dabei wird die Entfernung zwischen Sender und Reflektor mit einem einfachen geometrischen Zusammenhang bestimmt. Wird ein Lichtsignal auf einen Reflektor in einem Einfallswinkel gesendet, so wird das Licht unter einem bestimmten Ausfallswinkel reflektiert und auf einer bestimmten Position auf dem Empfänger detektiert. Ändert sich die Entfernung zwischen Sender und Reflektor und/oder Empfänger, dann ändert sich durch Veränderung von Ein- und Ausfallswinkel die Position an dem das Lichtsignal auf dem Empfänger detektiert wird. Die Positionsänderung bildet damit ein Maß für die zu bestimmende Entfernung. Durch die Verwendung mehrerer Empfänger können zusätzlich Nick- und Taumelbewegungen registriert und Messfehler kompensiert werden.

Die Verwendung der optischen Messeinrichtung zur Niveau-Bestimmung in einer Luftfeder wird hier ebenfalls angegeben. Die Niveau-Bestimmung ist zur elektronischen Regulierung des Niveaus einer Luftfeder notwendig. Dazu befinden sich die Sensoren zur Niveau-Bestimmung meist außerhalb der Luftfeder und werden über Gestänge angelenkt. Eine derartige Messeinrichtung ist anfällig gegen äußere Einflüsse wie Verschmutzung. Des weiteren ist es erforderlich, die Messeinrichtung für jedes Luftfedersystem zu kalibrieren. Bei einer optischen Messeinrichtung kann die Kalibrierung entfallen, da eine absolute Wegmessung erfolgt. Durch das Fehlen beweglicher Bauelemente ist die Messeinrichtung robust.

Es wird hier eine Luftfeder beschrieben, mit unter anderem einer Messeinrichtung, umfassend einen Rollbalg an dem an einer Stirnseite eine Abdeckung und an der anderen Stirnseite ein Abrollkolben vorgesehen ist, wobei an der Abdeckung der zumindest eine Sender und der zumindest eine Empfänger und an dem Abrollkolben der zumindest eine Reflektor angeordnet ist. Dadurch sind sämtliche Bauelemente in der Luftfeder integriert und bilden eine vormontierbare Einheit. Die Bauelemente der Messeinrichtung sind gegen äußere Einflüsse geschützt. Die optische Messeinrichtung ist genau und eine Kalibrierung kann entfallen.

### Kurzbeschreibung der Zeichnung

Einige Ausführungsbeispiele der erfindungsgemäßen Messeinrichtung (sowie eine weitere Messeinrichtung) werden nachfolgend anhand der Figuren näher erläutert. Es zeigen, jeweils in schematischer Darstellung:
Fig. 1 eine erfindungsgemäße Messeinrichtung zur Abstands-Bestimmung von Kraftfahrzeugteilen, in dieser Ausführung einer Luftfeder im Längsschnitt;
Fig. 2 die Bestimmung des Abstandes mittels der Phasenverschiebung in graphischer Form;
Fig. 3 eine Messeinrichtung bei der Lichtsignale überlagert werden;
Fig. 4 eine Messeinrichtung mit einem positionsempfindlichen Empfänger. (nicht durch die Ansprüche abgedecht).

### Ausführung der Erfindung

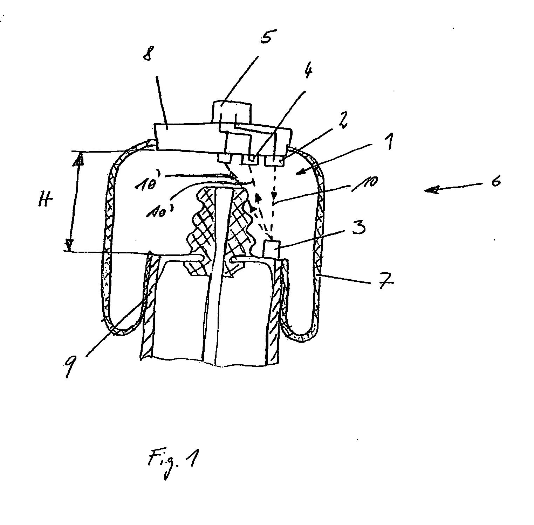

Figur 1 zeigt eine Messeinrichtung 1 mit einem optischen Messprinzip, die zur Abstands-Bestimmung in einem Kraftfahrzeugteil in dieser Ausführung einer Luftfeder 6 montiert ist. Die Luftfeder 6 weist einen Rollblag 7 auf, an dessen einer Stirnseite eine Abdeckung 8 und an der anderen Stirnseite ein Abrollkolben 9 angeordnet ist. Die Messeinrichtung 1 weist einen Sender 2, einen Reflektor 3 und zwei Empfänger 4, die im Längsschnitt betrachtet, nebeneinander mit Abstand zueinander angeordnet sind, auf. Des weiteren weist die Messeinrichtung noch eine Auswerteeinheit 5 auf, in der die durch den Empfänger 4 empfangenen Lichtsignale ausgewertet werden, um den zu berechnenden Abstand zu ermitteln. Der Sender 2, die beiden Empfänger 4 und die Auswerteeinheit sind an der Abdeckung angeordnet. Der Reflektor 3 ist an dem Abrollkolben 9 angeordnet. Der Reflektor 3 ist als Katzenauge, also als Retroreflektor ausgebildet. Der Sender ist als Laserstrahlquelle ausgebildet.

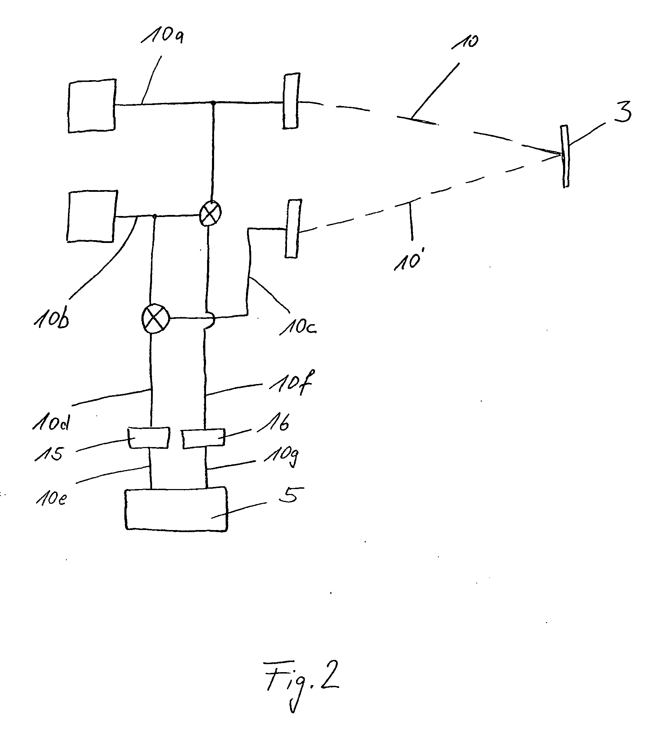

Mit einer Messeinrichtung gemäß Figur 1 wird grundsätzlich ein Messverfahren mit den folgenden Schritten durchgeführt:
Durch den Sender 2, meist eine Laserstrahlquellen wird ein Lichtsignal 10 ausgesendet. Das Lichtsignal ist ein kurzer Licht impuls oder ein kontinuierlich moduliertes Lichtsignal. Das Lichtsignal 10 wird durch den Reflektor 3 reflektiert und in dem Empfänger 4 empfangen. Das empfangene Lichtsignal 10 wird anschließend einer Auswerteeinheit 5 zugeführt in der der zu messende Abstand der Kraftfahrzeugteile (d.h. von Abdeckung 8 und Abrollholben 9) mittels des empfangenen Lichtsignals 10 bestimmt wird.
In einer Ausführung wird der Abstand (H) durch Messung der Laufzeit des Lichtsignals 10 vom Sender 2 über den Reflektor 3 zum Empfänger 4 bestimmt. Für dieses Messverfahren wird ein Lichtsignal 10 in Form eines kurzen Lichtimpulses mit einer Dauer von weniger als 10⁻¹² s durch den Sender 2 emittiert. Die Laufzeit des Lichtsignals 10 wird in der Auswerteeinheit 5 bestimmt. Die Laufzeit ist ein direktes Maß für den Abstand (H). Die Messgenauigkeit wird durch Berücksichtigung des durch Druck- und Temperaturveränderungen variablen Brechungsindex erhöht. Eine Messeinrichtung 1 für ein anderes Messverfahren ist in Figur 2 gezeigt. Dabei werden zwei elektrische Signale 10a, 10b erzeugt, deren Frequenz sich um 10 MHz unterscheidet, wobei die eine Modulationsfrequenz 10a 0,9 GHz und die zweite Modulationsfrequenz des anderen Signals 10b 0,9107 GHz beträgt. Diese Signale 10a, 10b werden wie folgt weitergeführt. Das Signal 10a wird direkt einer laserlichtemittierenden Diode 15 zugeführt, wodurch hiermit ein moduliertes Lichtsignal 10 erzeugt wird. Das Lichtsignal 10 wird durch den Sender 2 ausgesendet, durch den Reflektor 3 reflektiert und durch den Empfänger 4 empfangen, in ein elektrisches Signal 10c zurückgewandelt und einer Auswerteeinheit 5 zugeführt. Hierzu wird das Signal 10c mit der zweiten Modulationsfrequenz 10b überlagert, so dass ein entsprechendes Mischsignal 10d vorliegt, welches insbesondere die Differenzfrequenz 10e enthält, die durch einen Tiefpassfilter 15 bereinigt wird. Als Referenzsignal wird das ursprünglich generierte Signal 10a ebenfalls mit der zweiten Modulationsfrequenz 10b überlagert. Das resultierende zweite Mischsignal 10f enthält die jetzt nicht durch die Laufstrecke zum Reflektor 3 und zurück bedingte Phasenverschiebung, so dass nach einem zweiten Tiefpassfilter 16 ein Referenzsignal 10g vorliegt, zu dem in der Auswerteeinheit 5 nun auf Basis der Differenzfrequenz (10a-10b) die Phasenverschiebung der Signale 10e und 10g vergleichen wird.

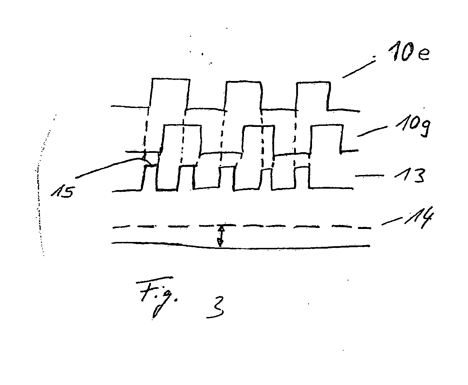

Die Auswertung der Signale 10e, 10g ist in Figur 3 gezeigt. In der Auswerteeinheit 5 werden das gesendete und das empfangene Signal, jeweils bereinigt um höher frequente Signalanteile als die Differenzfrequenz in ein Antivalenzgatter eingeleitet. Das bei dieser logischen Operation erzeugte Signal 13 weist Spitzen 15 auf, wenn die Phasen der beiden Lichtsignale 10e, 10g gegenläufig sind. Die Breite dieser Spitzen 15 repräsentiert dabei das Maß für die Phasenverschiebung und damit für den Abstand (H). Die Spitzen 15 werden über einen bestimmten Zyklus aufsummiert und in eine Spannung umgesetzt. Da immer nur die Differenzfrequenz betrachtet wird, erfolgt die Auswertung im MHz-Bereich.

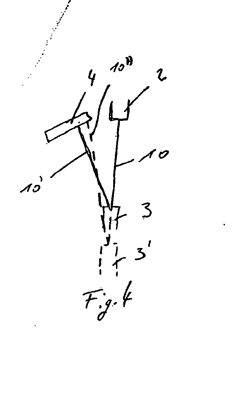

Ein anderes Messverfahren (nicht durch die Ansprüche abgedecht) ist in Figur 4 gezeigt. Nach diesem Verfahren wird ein Lichtsignal 10 durch einen Sender 2 ausgesendet, durch den Reflektor 3 reflektiert und das Lichtsignal 10' durch den Empfänger 4 aufgenommen, wobei der Empfänger positionsempfindlich ausgebildet ist. Positionsempfindliche Empfänger sind beispielsweise Mehrelement-Dioden oder CCD-Sensoren. Aufgrund der geometrischen Verhältnisse erfolgt die Aufnahme des Lichtsignals 10 an einer bestimmten Position des Empfängers. Verschiebt sich die Position des Reflektors 3', so ändern sich die Winkelverhältnisse, unter denen das Lichtsignal 10" reflektiert wird. Dadurch wird das Lichtsignal 10" an einer anderen Position auf dem Empfänger 4 empfangen. Die Änderung der Position des Lichtsignals 10', 10" auf dem Empfänger stellt somit ein Maß für den Abstand (H) dar.

## Patentansprüche

1. Luftfeder (6) mit einer Messeinrichtung (1) mit einem optischen Messprinzip, umfassend zumindest einen Sender (2), einen Reflektor (3) und einen Empfänger (4) sowie eine Auswerteeinheit (5), wobei die Luftfeder einen Rollbalg (7) umfasst, an dem an einer Stirnseite eine Abdeckung (8) und an der anderen Stirnseite ein Abrollkolben (9) angeordnet ist, wobei an der Abdeckung (8) der zumindest eine Sender (2) und der zumindest eine Empfänger (4) und an dem Abrollkolben (9) der zumindest eine Reflektor (3) angeordnet ist und wobei die Auswerteeinheit (5) zur Bestimmung des Abstands (H) von Abdeckung (8) und Abrollkolben (9) eingerichtet ist, **dadurch gekennzeichnet, dass** der Sender als Laserstrahlquelle zum Aussenden eines kontinuierlichen modulierten Lichtsignals ausgebildet ist, wobei in der Auswerteeinheit (5) die Phasendifferenz zwischen empfangenem und gesendetem Lichtsignal bestimmt wird, oder zum Aussenden eines kurzen Lichtimpulses ausgebildet ist, wobei die Laufzeit des Lichtimpulses bis zum Auftreffen auf dem Empfänger (4) bestimmt wird.

2. Luftfeder nach Anspruch 1, **dadurch gekennzeichnet, dass** der Reflektor (3) als Retroreflektor ausgebildet ist.

3. Luftfeder nach Anspruch 1 oder 2, **dadurch gekennzeichnet, dass** mehrere Empfänger (4), im Längsschnitt betrachtet, nebeneinander mit Abstand zueinander angeordnet sind.

4. Verfahren zur Bestimmung des Abstands (4) on Abdeckung (8) und Abrollkolbery (9) einer Luftfeder (6) nach einem der Ansprüche 1 bis 3, aufweisend folgende Schritte:
• Aussenden zumindest eines kontinuierlichen modulierten Lichtsignals (10) durch zumindest einen Sender (2), der in einer Abdeckung (8) einer Luftfeder (6) angeordnet ist;
• Reflektieren des kontinuierlichen Lichtsignals (10) durch einen Reflektor (3), der in einem Abrollkolben (9) der Luftfeder (6) angeordnet ist;
• Empfangen des kontinuierlichen Lichtsignals (10') durch zumindest einem Empfänger (4), der in der Abdeckung (8) angeordnet ist und Umsetzung zu einem elektrischen Signal;
• Auswerten des empfangenen Lichtsignals (10') in einer Auswerteeinheit (5) durch Bestimmung der Phasendifferenz zwischen elektrischem Signal stammend aus dem empfangenem Lichtsignal (10') und elektrischem Signal zugrundeliegend dem gesendetem Lichtsignal (10);
• Bestimmung des Abstands (H) aus der Phasendifferenz der beiden elektrischen Signale (10, 10')

5. Verfahren nach Anspruch 4, **dadurch gekennzeichnet, dass** die Modulationsfrequenz des Lichtsignals (10) zwischen 0,5 bis 5 GHz, vorzugsweise 0,8 bis 2 GHz beträgt.

6. Verfahren nach Anspruch 4 oder 5, **dadurch gekennzeichnet, dass** in der Auswerteeinheit (5) die elektrischen Signale, von gesendetem und empfangenem Signal in ein Antivalenz-Gatter (15) eingeleitet werden und dass das aus der entsprechenden logischen Operation resultierende Signal (13) über eine bestimmte Anzahl von Zyklen summiert wird und dass der aus der Summation resultierende Wert in eine elektrische Spannung (14) umgesetzt wird, die ein Maß für den zu messenden Abstand repräsentiert.

7. Verfahren nach einem der Ansprüche 4 bis 6, aufweisend folgende Schritte,
• Bilden zweier kontinuierlicher Signale (10a, 10b) durch zwei Sender (2), wobei sich die Frequenzen der beiden Lichtsignale um zumindest 1 MHz unterscheiden;
• Aussenden des resultierenden Lichtsignals (10);
• Reflektieren des resultierenden Lichtsignals (10) durch einen Reflektor (3);
• Empfangen des resultierenden Lichtsignals (10') durch zumindest einen Empfänger (4);
• Mischen jeweils von gesendetem und empfangenem elektrischen Signal mit der zweiten Signalfrequenz , um ein resultierendes Mischsignal (10) mit einer Schwebungsfrequenz zu erzeugen, die insbesondere die Differenz der Frequenzen der zwei Sender enthält;
• Bestimmung der Phasendifferenz aus der Schwebungsfrequenz des empfangenen Lichtsignals (10') und der Schwebungsfrequenz des gesendeten Lichtsignals (10') in der Auswerteeinheit (5);
• Bestimmung des Abstands (H) aus der Phasendifferenz.

## Claims

1. Air spring (6) having a measuring device (1) using an optical measuring principle, comprising at least an emitter (2), a reflector (3) and a receiver (4) as well as an analyzing unit (5), wherein the air spring comprises a rolling lobe (7) on which a cover (8) is arranged at one side face and a rolling piston (9) at the other side face, wherein the at least one emitter (2) and the at least one receiver (4) is arranged on the cover (8) and the at least one reflector (3) is arranged on the rolling piston (9), and wherein the analyzing unit (5) is configured for determining the distance (H) from the cover (8) to the rolling piston (9), **characterized in that** the emitter is configured as a laser beam source for emitting a continuous, modulated light signal, the phase difference is determined between the emitted and received light signal in the analyzing unit (5), or for emitting a short light pulse, the elapsed time of the light pulse until hitting the receiver (4) being determined.

2. Air spring according to claim 1 **characterized in that** the reflector (3) is configured as a retroreflector.

3. Air spring according to claims 1 or 2, **characterized in that** a plurality of receivers (4) are arranged spaced apart next to each other in a cross sectional view.

4. Method for determining the distance (H) from a cover (8) to a rolling piston (9) of an air spring (6) according to one of the claims 1 to 3 comprising the following steps:
• Emitting at least one continuous, modulated light signal (10) by at least one emitter (2) which is arranged on a cover (8) of an air spring (6)
• Reflecting the continuous light signal (10) by a reflector (3) which is arranged on the rolling piston (9) of the air spring (6).
• Receiving the continuous light signal (10') by at least one receiver (4) which is arranged on the cover (8) and transferring it into an electrical signal;
• Analyzing the received light signal (10') in an analyzing unit (5) by determining the phase difference between the electric signal generated by the received light signal (10') and the electrical signal based on the sent light signal (10');
• Determining the distance (H) from the phase difference of the two electrical signals (10, 10').

5. Method according to claim 4, **characterized in that** the modulation frequency of the light signal (10) is between 0.5 to 5 GHz, in particular 0.8 to 2 GHz.

6. Method according to claim 4 or 5, **characterized in that** the electric signals of the emitted and the received signal are introduced in an antivalence grit (15) in the analyzing unit (5) and that the signal (30) resulting from corresponding logic operation is summed over a certain amount of cycles and that the value resulting from the summation is transferred in an electrical voltage (14) which is a measure for the distance to be measured.

7. Method according to one of the claims 4 to 6, comprising the following steps.
• Generating two continuous signals (10a, 10b) by two emitters (2), wherein the frequencies of the two light signals differ by at least 1 MHz;
• Emitting the resulting lights signal (10);
• Reflecting the resulting light signal (10) by a reflector (3);
• Receiving the resulting light signal (10') by at least one receiver (4);
• Mixing each of the emitted and received electrical signal with the second signal frequency in order to generate an resulting mixing signal (10) having a beat frequency which comprises in particular the difference between the frequencies of the two emitters;
• Determining the phase difference by the beat frequency of the received light signal (10') and the beat frequency of the emitted light signal (10') in the analyzing unit (5)
• Determining the distance (H) by the phase difference.

## Revendications

1. Ressort pneumatique (6) comprenant un système de mesure (1) avec un principe de mesure optique, incluant au moins un émetteur (2), un réflecteur (3) et un récepteur (4) ainsi qu'une unité d'évaluation (5), dans lequel le ressort pneumatique inclut un soufflet déroulant (7) sur lequel, au niveau d'une face frontale, est agencé un recouvrement (8) et au niveau de l'autre face frontale est agencé un piston à déroulement (9), dans lequel ledit au moins un émetteur (2) et ledit au moins un récepteur (4) sont agencés sur le recouvrement (8), et ledit au moins un réflecteur (3) est agencé sur le piston à déroulement (7), et dans lequel l'unité d'évaluation (5) est conçue pour déterminer la distance (H) depuis le recouvrement (8) et depuis le piston à déroulement (9),
**caractérisé en ce que** l'émetteur est réalisé sous forme de source de rayonnement laser pour émettre un signal de lumière modulée continu, dans lequel la différence de phase entre le signal de lumière reçu et le signal de lumière émis est déterminée dans l'unité d'évaluation (5), ou bien est réalisé pour émettre une courte impulsion de lumière, et le temps de parcours de l'impulsion de lumière jusqu'à l'arrivée sur le récepteur (4) est déterminé.

2. Ressort pneumatique selon la revendication 1, **caractérisé en ce que** le réflecteur (3) est réalisé sous forme de rétroréflecteur.

3. Ressort pneumatique selon la revendication 1 ou 2, **caractérisé en ce que** plusieurs récepteurs (4) sont agencés, observés dans une coupe longitudinale, les à côté des autres et à distance les uns des autres.

4. Procédé pour la détermination de la distance (H) du recouvrement (8) et du piston à déroulement (9) d'un ressort pneumatique (6) selon l'une des revendications 1 à 3, comprenant les étapes suivantes :
- on émet au moins un signal de lumière modulée continu (10) par au moins un émetteur (2) qui est agencé dans un recouvrement (8) d'un ressort pneumatique (6) ;
- on fait réfléchir le signal de lumière continue (10) au moyen d'un réflecteur (3) qui est agencé dans un piston à déroulement (9) du ressort pneumatique (6) ;
- on reçoit le signal de lumière continu (10') au moyen d'au moins un récepteur (4) qui est agencé dans le recouvrement (8) et on le convertit en un signal électrique ;
- on évalue le signal de lumière reçu (10') dans une unité d'évaluation (5) par détermination de la différence de phase entre le signal électrique provenant du signal de lumière reçu (10') et le signal électrique qui est à l'origine du signal de lumière émis (10) ;
- on détermine la distance (H) à partir de la différence de phase des deux signaux électriques (10, 10').

5. Procédé selon la revendication 4, **caractérisé en ce que** la fréquence de modulation du signal de lumière (10) est entre 0,5 et 5 GHz, de préférence 0,8 à 2,0 GHz.

6. Procédé selon la revendication 4 ou 5, **caractérisé en ce que** les signaux électriques, du signal émis et du signal reçu, sont injectées, dans l'unité d'évaluation (5), dans une porte d'antivalence, et **en ce que** le signal résultant de l'opération logique correspondante (13) est sommé sur un certain nombre de cycles, et **en ce que** la valeur résultant de la sommation est convertie en une tension électrique, qui représente une mesure pour la distance à déterminer.

7. Procédé selon l'une des revendications 4 à 6, comprenant les étapes suivantes :
- on forme de signaux continus (10a, 10b) par deux émetteurs (2), de sorte que les fréquences des deux signaux de lumière diffèrent d'au moins 1 mégahertz ;
- on émet le signal de lumière résultant (10) ;
- on réfléchit le signal de lumière résultant (10) au moyen d'un réflecteur (3) ;
- on reçoit le signal de lumière résultant (10') au moyen d'au moins un récepteur (4) ;
- on mélange respectivement le signal électrique émis et le signal électrique reçu avec la seconde fréquence, afin d'engendrer un signal mixte résultant (10) avec une fréquence de battement, qui contient en particulier la différence des fréquences des deux émetteurs ;
- on détermine la différence de phase à partir de la fréquence de battement du signal de lumière reçu (10') et de la fréquence d'oscillation du signal de lumière émis (10') dans l'unité d'évaluation (5) ;
- on détermine la distance (H) à partir de la différence de phase.
